# EUROPEAN PATENT APPLICATION

(11) **EP 2 341 429 A2**
(43) Date of publication of application: **06.07.2011**
(21) Application number: 10197425.1
(22) Date of filing: 30.12.2010
(51) Int. Cl.: G06F 9/46

(54) **Control of apparatus incorporating computer**

(30) Priority: 05.01.2010 JP 2010000481
(71) Applicant: Seiko Epson Corporation, Shinjuku-ku Tokyo (JP)
(72) Inventor: Iwata, Akira, Suwa-shi Nagano 392-8502 (JP); Kotaka, Satoshi, Suwa-shi Nagano 392-8502 (JP)
(74) Representative: Cloughley, Peter Andrew

(57) **Abstract**

The burden of designing software for controlling an apparatus incorporating a computer is reduced. An apparatus that incorporates a computer having software including a plurality of components and that is controlled by the computer includes an obtainment unit that obtains information to be delivered from a component to another component, a registration unit that registers information identification information for identifying information that each component wishes to receive in a delivery table in advance, and a delivery unit that identifies a component to which the information obtained by the obtainment unit is to be delivered on the basis of the delivery table and delivers the information to the identified component.

## Description

The present invention relates to the control of an apparatus incorporating a computer.

As an apparatus incorporating a computer formed of hardware such as a central processing unit (CPU) and software (hereinafter may be referred to as an incorporating apparatus), for example, a printer is widely used. In a printer as an incorporating apparatus, a computer performs, for example, various types of control such as the control of a printer engine and the control of a display monitor.

In general, software forming a computer incorporated in an incorporating apparatus includes a plurality of modules called "components" corresponding to various types of control performed on the incorporating apparatus, and a CPU in the computer executes each component to perform control corresponding to the component. During the control of an incorporating apparatus, a connection is established between components and transmission and reception of information (requests and notifications) are performed between the components (for example, refer to JP-T-2003-526168, JP-A-2006-277053, and JP-A-2003-22251).

When information is transmitted and received between components, a component that transmits the information typically designates a component to receive the information. For this reason, if the hardware configuration or the functional configuration of an incorporating apparatus is changed and accordingly components included in software are changed, part of the components relating to transmission and reception of information needs to be changed. Therefore, designing of software for a computer incorporated in an incorporating apparatus has been cumbersome.

The above has been a problem not only in the control of a printer, but also in the control of an apparatus performed by a computer incorporated in the apparatus.

An advantage of some aspects of the invention is that the burden of designing software for controlling an apparatus incorporating a computer can be reduced.

In order to solve at least part of the above problem, the invention can be realized as the following embodiments or application examples.

### Application Example 1

An apparatus that incorporates a computer having software including a plurality of components and that is controlled by the computer includes an obtainment unit that obtains information to be delivered from a component to another component, a registration unit that registers information identification information for identifying information that each component wishes to receive in a delivery table in advance, and a delivery unit that identifies a component to which the information obtained by the obtainment unit is to be delivered on the basis of the delivery table and delivers the information to the identified component.

With this apparatus, the information identification information for identifying information that each component wishes to receive is registered in the delivery table in advance, the information to be delivered from a component to another component is obtained, a component to which the obtained information is to be delivered is identified on the basis of the delivery table, and the information is delivered to the identified component. Therefore, a component that transmits information does not need to take account of which component the component is to transmit the information to, and a component that receives information does not need to take account of which component the component is to receive the information from. This makes it possible to design components without taking account of which component each component is to transmit information to or receive information from. As a result, with this apparatus, the burden of designing software for controlling an apparatus incorporating a computer can be reduced.

### Application Example 2

In the apparatus according to Application Example 1, the registration unit associates component identification information for identifying the component that wishes to receive the information with the information identification information and registers the component identification information and the information identification information in the delivery table on the basis of a request from the component.

With this apparatus, since the component identification information for identifying a component that wishes to receive information is associated with the information identification information and the component identification information and the information identification information are registered in the delivery table on the basis of a request from the component, it is possible to identify the component to which information is to be delivered on the basis of the delivery table.

### Application Example 3

In the apparatus according to Application Example 1, the component is any of a component for controlling hardware included in the apparatus, a component for realizing a certain function using the hardware, or a component for performing control relating to operation of an operation section included in the apparatus.

With this apparatus, any of a component for controlling hardware included in the apparatus, a component for realizing a certain function using the hardware, or a component for performing control relating to operation of an operation section included in the apparatus can be designed without taking account of which component the component is to transmit information to or receive information from. Therefore, with this apparatus, the burden of designing software having any of the above components can be reduced.

### Application Example 4

In the apparatus according to Application Example 1, the information to be delivered is at least either a request issued from a component to another component or a notification issued from a component to one or more other components.

With this apparatus, even if the information transmitted and received between components is either a request issued from a component to another component or a notification issued from a component to one or more other components, it is possible to design components without taking account of which component each component is to transmit information to or receive information from, which reduces the burden of designing software.

It is to be understood that the invention may be implemented in the form of various aspects thereof. The invention may be realized in the form of, for example, an apparatus incorporating a computer, a method for controlling the apparatus, a computer program for realizing functions of the method or the apparatus, a recording medium storing the computer program, a data signal including the computer program and embodied in a carrier wave, and the like.

### Embodiments of the present invention will now be described by way of further example only and with reference to the accompanying drawings, in which:

Fig. 1 is a diagram schematically illustrating the configuration of a printer 100 according to an embodiment of the invention.

Fig. 2 is a diagram illustrating the component configuration of a control program 124 according to the embodiment.

Fig. 3 is a diagram illustrating an outline of inter-component communication in the printer 100 according to the embodiment.

Figs. 4A, 4B, 4C, and 4D are diagrams illustrating an example of the content of each handler table.

Figs. 5A and 5B are diagrams illustrating an example of the content of each handler list.

Fig. 6 is a diagram illustrating in detail an example of handler registration for performing control as an owner CrO.

Fig. 7 is a diagram illustrating an example of request delivery in detail.

Fig. 8 is a diagram illustrating in detail an example of handler registration for performing control as a client CrC.

Fig. 9 is a diagram illustrating an example of notification delivery in detail.

Next, exemplary embodiments of the invention will be described in the following order.

### A. Embodiment

### A-1. Configuration

### A-2. Inter-component Communication

### B. Modification

### A. Embodiment

### A-1. Configuration

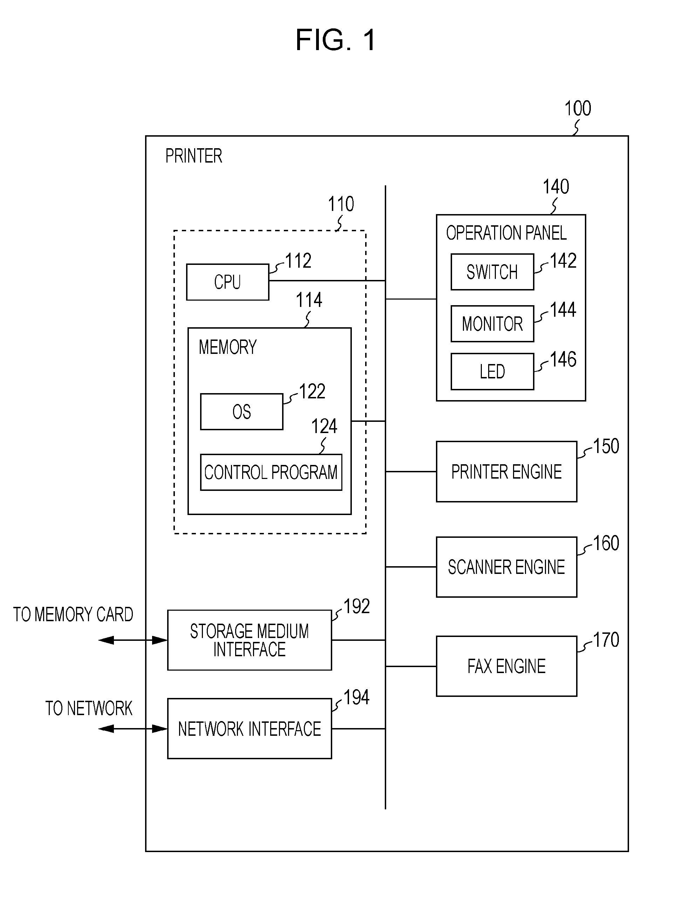

Fig. 1 is a diagram schematically illustrating the configuration of a printer 100 according to an embodiment of the invention. The printer 100 according to this embodiment has a CPU 112, a memory 114, an operation panel 140, a printer engine 150, a scanner engine 160, a fax engine 170, a storage medium interface 192, and a network interface 194. The components of the printer 100 are connected to one another through a bus.

The CPU 112 and the memory 114 form a computer 110 incorporated in the printer 100, which is an incorporating apparatus. The memory 114 stores an operating system (OS) 122 and a control program 124 as software. The CPU 112 as hardware reads the OS 122 and the control program 124 from the memory 114 and executes the control program 124 under the OS 122. The control of the printer 100 by the computer 110 is thus realized.

The printer engine 150, the scanner engine 160, and the fax engine 170 are hardware mechanisms (devices) that provide a print function, a scan function, and a fax function, respectively. The operation panel 140 includes a switch 142 for user operation, a monitor 144 for displaying various pieces of information and images, and a light-emitting diode (LED) lamp 146 as an indicator. The storage medium interface 192 is an interface for enabling communication with a storage medium such as a memory card. The network interface 194 is an interface for enabling communication with a network such as a local area network (LAN). The printer 100 may also include an interface for enabling communication with another apparatus (for example, a digital still camera or a personal computer).

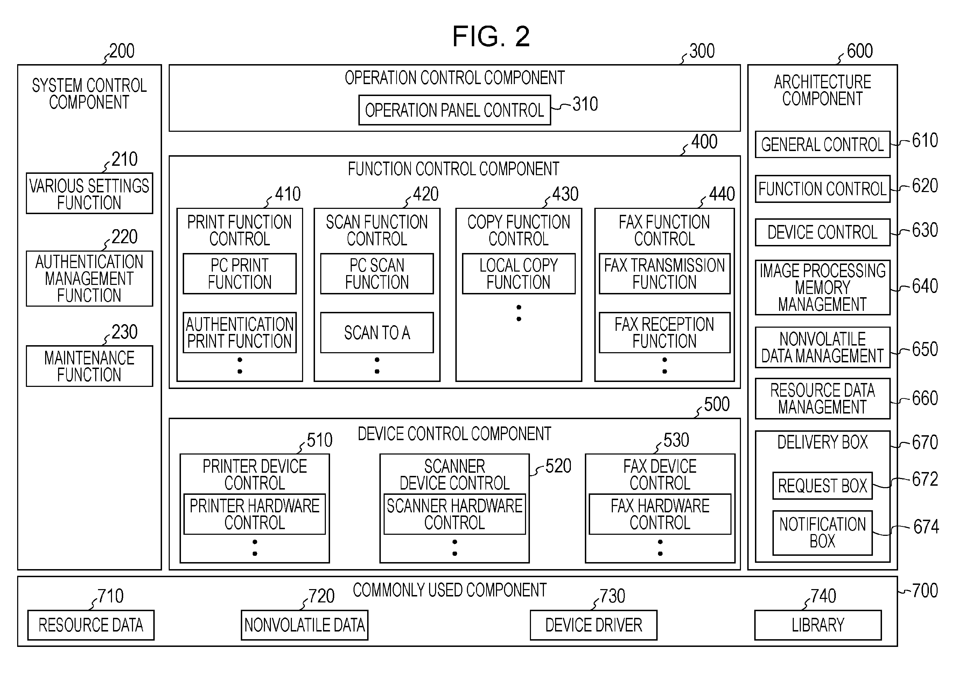

Fig. 2 is a diagram illustrating the component configuration of the control program 124 according to this embodiment. The control program 124 (illustrated in Fig. 1) for performing various types of control on the printer 100 includes a plurality of components (modules). More specifically, the control program 124 includes a system control component 200, an operation control component 300, a function control component 400, a device control component 500, an architecture component 600, and a commonly used component 700.

The system control component 200 is a component that controls the entire system of the printer 100 and includes, for example, a various settings function component 210, an authentication management function component 220, and a maintenance function component 230 as subcomponents thereof.

The operation control component 300 is a component that performs control relating to the user operation of the printer 100 and includes, for example, an operation panel control component 310 that controls the operation panel 140 (illustrated in Fig. 1) as a subcomponent thereof.

The function control component 400 is a component that performs control relating to functions provided by the printer 100, namely the print function, the scan function, a copy function, and the fax function, and includes a print function control component 410, a scan function control component 420, a copy function control component 430, and a fax function control component 440 as subcomponents thereof. These subcomponents may further include one or a plurality of subcomponents for realizing the respective functions.

The device control component 500 is a component that performs control relating to the hardware mechanisms (devices) included in the printer 100, namely a printer device, a scanner device, and a fax device, and includes a printer device control component 510, a scanner device control component 520, and a fax device control component 530 as subcomponents thereof. These subcomponents may further include one or a plurality of subcomponents for realizing the control of the respective devices.

The architecture component 600 is a component that performs control relating to the architecture of the printer 100, and includes a general control component 610, a function control component 620, a device control component 630, an image processing memory management component 640, a nonvolatile data management component 650, and a resource data management component 660 as subcomponents thereof. In addition, the architecture component 600 also includes a delivery box 670 that is used for inter-component communication, which will be described later. The delivery box 670 includes a request box 672 and a notification box 674.

The commonly used component 700 is a component that is commonly used by the components of the printer 100, and includes, for example, a resource data component 710, a nonvolatile data component 720, a device driver component 730, and a library component 740 as subcomponents thereof.

The CPU 112 (illustrated in Fig. 1) executes each component illustrated in Fig. 2 to perform control corresponding to the component. In the following description, the CPU 112 executing each component will be simply referred to by the corresponding name of the component. Because the content of the components and the control and the functions realized by the components illustrated in Fig. 2 are those typical for a multifunction printer, detailed description thereof is omitted herein.

### A-2. Inter-component Communication

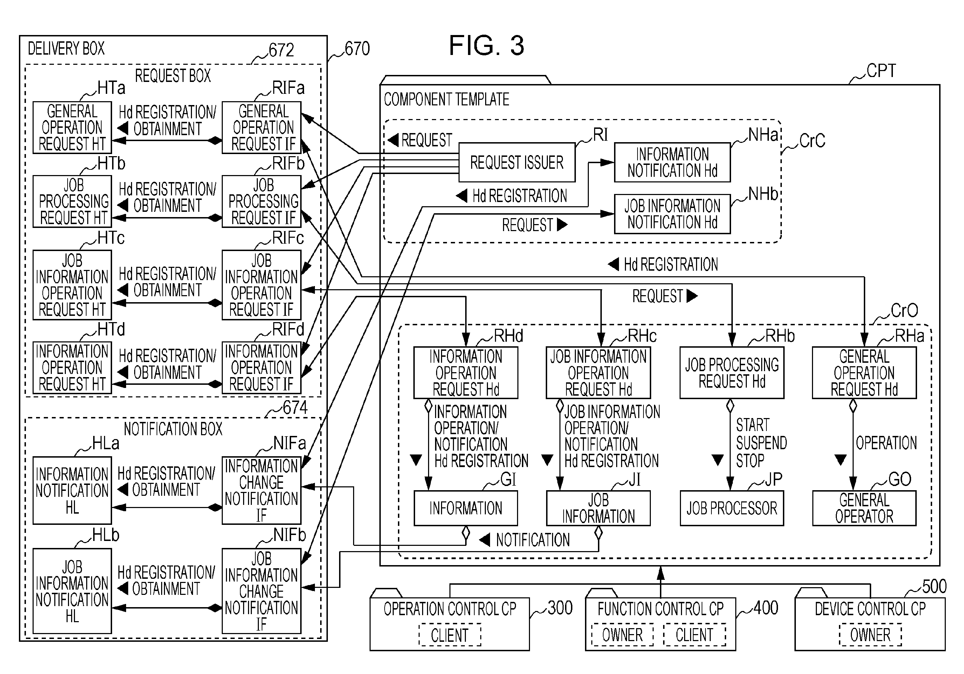

Fig. 3 is a diagram illustrating an outline of inter-component communication in the printer 100 according to this embodiment. In the printer 100 according to this embodiment, transmission and reception of information (communication of requests and notifications) between components are performed using the delivery box 670 (illustrated in Fig. 2). More specifically, a component that wishes to deliver information executes a registration process in advance in order to register the corresponding relationship between information for indentifying the information that the component wishes to deliver (information identification information) and information for identifying the component itself (component identification information) in the delivery box 670. Requests and notifications issued by the components are delivered to appropriate components in accordance with the registered content in the delivery box 670.

Fig. 3 illustrates a component template CPT as a template for components and the delivery box 670 including the request box 672 and the notification box 674. A component may perform control as a client CrC for issuing a request to an owner and receiving a notification from the owner, or may perform control as an owner CrO for receiving a request from a client and issuing a notification to the client. As illustrated in Fig. 3, because a component that belongs to the operation control component (CP) 300 (also illustrated in Fig. 2) performs only the control as a client CrC, the component executes a registration process necessary for performing the control as a client CrC, that is, a process for registering information for identifying a notification that the component wishes to receive in the notification box 674. Because a component that belongs to the device control component 500 performs only the control as an owner CrO, the component executes a registration process necessary for performing the control as an owner CrO, that is, a process for registering information for identifying a request that the component wishes to receive in the request box 672. Because a component that belongs to the function control component 400 performs both the control as a client CrC and the control as an owner CrO, the component executes registration processes necessary for performing the control as a client CrO and the control as an owner CrO.

A component that performs the control as an owner CrO creates a handler for performing the control as an owner CrO (handler for processing requests and issuing notifications) and registers the created handler in a handler table (HT) held by an interface (IF) of the request box 672. In the example illustrated in Fig. 3, a general operation request handler (Hd) RHa, a job processing request handler RHb, a job information operation request handler RHc, and an information operation request handler RHd are created as handlers for performing the control as an owner CrO. The created handlers are registered in handler tables (a general operation request handler table HTa, a job processing request handler table HTb, a job information operation request handler table HTc, and an information operation request handler table HTd) held by corresponding interfaces (a general operation request interface RIFa, a job processing request interface RIFb, a job information operation request interface RIFc, and an information operation request interface RIFd) of the request box 672. At this time, a component functions as registration means for registering information identification information for identifying information that the component wishes to receive in the handler tables in the request box 672 in advance. In addition, a request is issued from a single component to another single component. That is, a transmission component and a reception component for a request are in a one-to-one relationship.

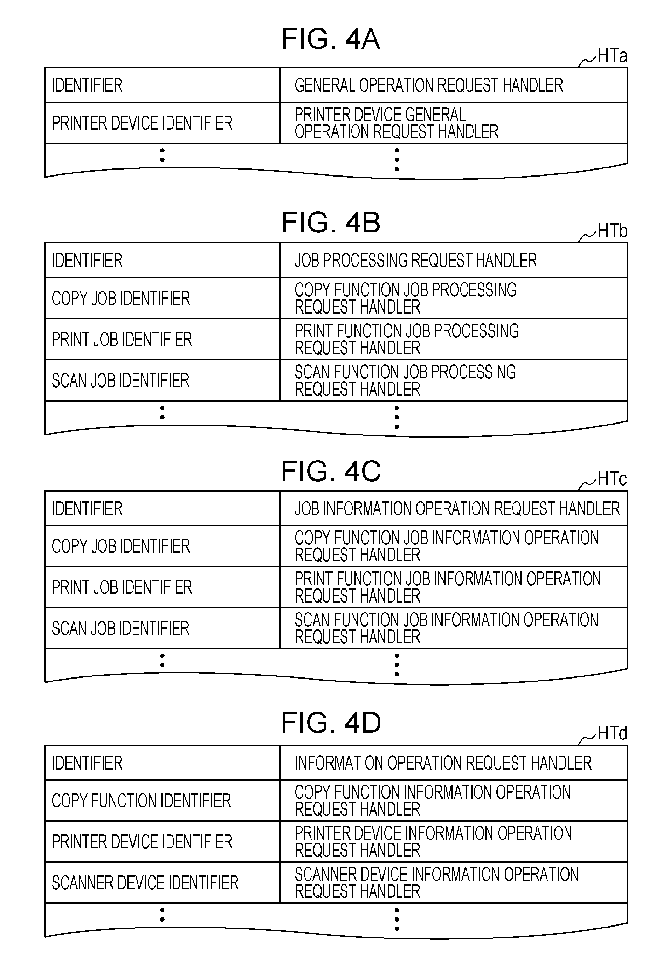

Figs. 4A, 4B, 4C, and 4D are diagrams illustrating an example of the content of the handler tables. As illustrated in Fig. 4A, in the general operation request handler table HTa, an identifier for identifying a processor of a general operation request (for example, an identifier of the printer device), which is information for identifying a request, and the general operation request handler RHa (for example, a general operation request handler RHa of the printer device control component 510) are associated with each other and registered. In addition, as illustrated in Fig. 4B, in the job processing request handler table HTb, an identifier for identifying a job (for example, a copy job identifier, a print job identifier, or a scan job identifier), which is information for identifying a request, and the job processing request handler RHb (for example, a job processing request handler RHb of the copy function control component 430, the print function control component 410, or the scan function control component 420) are associated with each other and registered. In addition, as illustrated in Fig. 4C, in the job information operation request handler table HTc, an identifier of a job for identifying a processor of job information (for example, a copy job identifier, a print job identifier, or a scan job identifier), which is information for identifying a request, and the job information operation request handler RHc (for example, a job information operation request handler RHc of the copy function control component 430, the print function control component 410, or the scan function control component 420) are associated with each other and registered. In addition, as illustrated in Fig. 4D, in the information operation request handler table HTd, an identifier for identifying a processor of a request (for example, a copy function identifier, a printer device identifier, or a scanner device identifier), which is information for identifying a request, and the information operation request handler RHd (for example, an information operation request handler RHd of the copy function control component 430, the printer device control component 510, or the scanner device control component 520) are associated with each other and registered.

A component that performs the control as a client CrC creates a handler for performing the control as a client CrC (handler for issuing requests and receiving notifications) and registers the created handler in a handler list (HL) held by an interface of the notification box 674. In the example illustrated by Fig. 3, an information notification handler NHa and a job information notification handler NHb are created as handlers for performing the control as a client CrC. The created handlers are registered in handler lists (an information notification handler list HLa and a job information notification handler list HLb) held by corresponding interfaces (an information change notification interface NIFa and a job information change notification interface NIFb) of the notification box 674. At this time, the component functions as registration means for registering information identification information for identifying information that the component wishes to receive in the handler lists in the notification box 674 in advance. In addition, a notification is issued from a single component to one or a plurality of components. That is, a transmission component and a reception component for a notification are in a one-to-one or one-to-plural relationship.

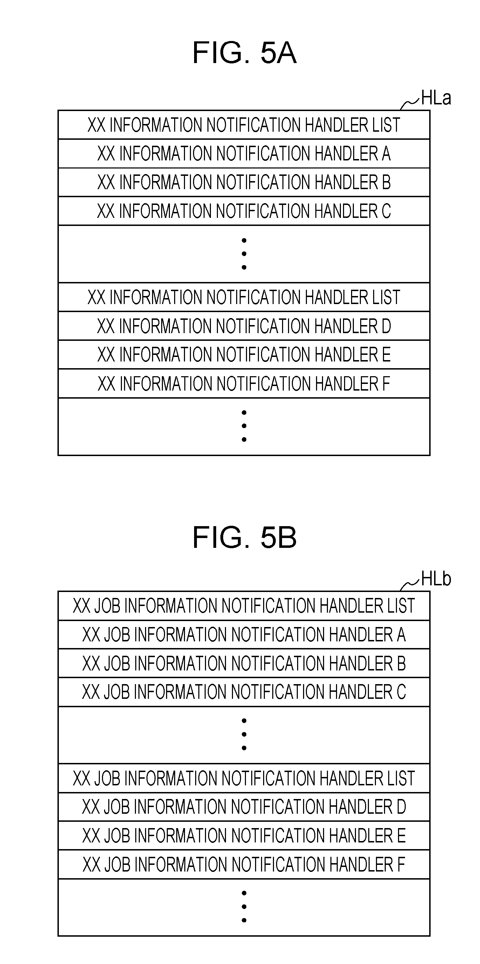

Figs. 5A and 5B are diagrams illustrating an example of the content of the handler lists. As illustrated in Fig. 5A, in the information notification handler list HLa, an information notification handler NHa of the delivery destination of a notification is registered for each information notification name, which is information for identifying a notification. In addition, as illustrated in Fig. 5B, in the job information notification handler list HLb, a job information notification handler NHb of the notification destination of job information is registered for each job information notification name, which is information for identifying a notification.

As illustrated in Fig. 3, a request issuer RI in the control as a client CrC issues a request to the request box 672. When the request is issued, an interface corresponding to the type of the issued request refers to a handler table held thereby, obtains an identifier of a handler to which the request is to be delivered, and delivers the request to the handler identified by the identifier. Upon receiving a request, a handler makes, for example, a job processor JP or a general operator GO execute a process in accordance with the request. In the case of the control as an owner CrO, on the other hand, a notification of information GI or job information JI is issued to the notification box 674. When the notification is issued, an interface corresponding to the type of the issued notification refers to a handler list held thereby, obtains an identifier of a handler to which the notification is to be delivered, and delivers the notification to the handler identified by the identifier. Transmission and reception of information (requests and notifications) between components are thus realized. As well as functioning as obtainment means for obtaining information to be delivered from a component to another component, each interface also functions as delivery means for identifying a component to which the obtained information is to be delivered on the basis of the information in the delivery box 670 and delivering the identified information to the component.

The registration process may be executed at any time. For example, the registration process may be executed before the delivery of a product, or only a necessary part of the registration process may be executed after detecting the presence of hardware or options upon turning on the printer 100.

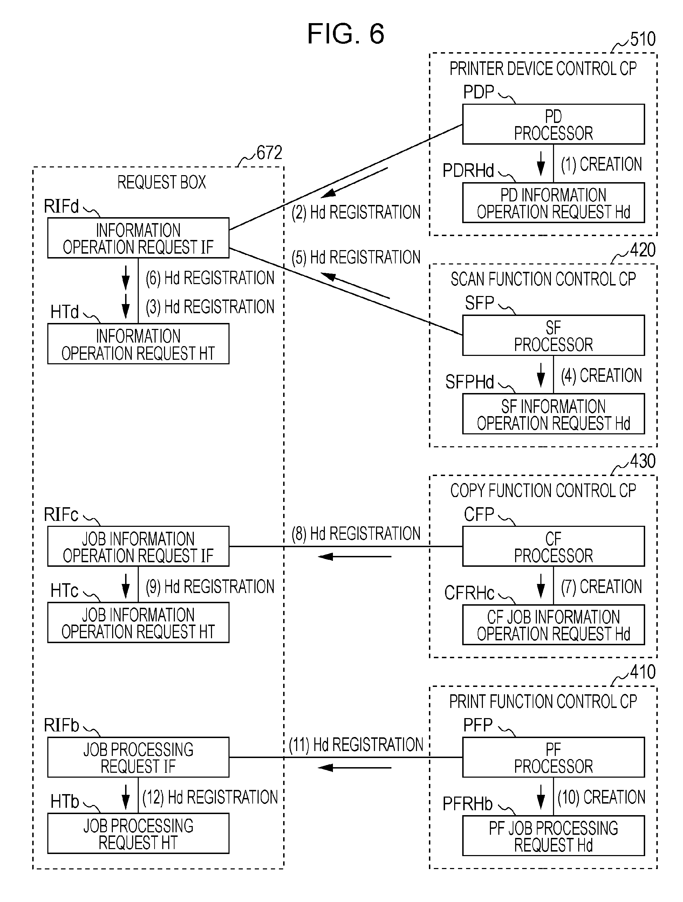

Fig. 6 is a diagram illustrating in detail an example of the handler registration for performing the control as an owner CrO. In the printer device control component 510, a printer device (PD) processor PDP creates a printer device information operation request handler PDRHd (refer to (1) of Fig. 6) and issues a registration instruction to the information operation request interface RIFd of the request box 672 using a printer device identifier and a specification generated by the printer device information operation request handler PDRHd as arguments (refer to (2) of Fig. 6). Upon receiving the registration instruction, the information operation request interface RIFd registers delivery information that associates the printer device identifier with the printer device information operation request handler PDRHd in the information operation request handler table HTd (refer to (3) of Fig. 6).

In a similar manner to the above, in the scan function control component 420, a scan function (SF) processor SFP creates a scan function information operation request handler SFRHd (refer to (4) of Fig. 6) and issues a registration instruction to the information operation request interface RIFd of the request box 672 using a scan function identifier and a specification generated by the scan function information operation request handler SFRHd as arguments (refer to (5) of Fig. 6). Upon receiving the registration instruction, the information operation request interface RIFd registers delivery information that associates the scan function identifier with the scan function information operation request handler SFRHd in the information operation request handler table HTd (refer to (6) of Fig. 6).

In addition, in the copy function control component 430, a copy function (CF) processor CFP creates a copy function job information operation request handler CFRHc (refer to (7) of Fig. 6) and issues a registration instruction to the job information operation request interface RIFc of the request box 672 using a copy function job identifier and a specification generated by the copy function job information operation request handler CFRHc as arguments (refer to (8) of Fig. 6). Upon receiving the registration instruction, the job information operation request interface RIFc registers delivery information that associates the copy function job identifier with the copy function job information operation request handler CFRHc in the job information operation request handler table HTc (refer to (9) of Fig. 6).

In addition, in the print function control component 410, a print function (PF) processor PFP creates a print function job processing request handler PFRHb (refer to (10) of Fig. 6) and issues a registration instruction to the job processing request interface RIFb of the request box 672 using a print job identifier and a specification generated by the print function job processing request handler PFRHb as arguments (refer to (11) of Fig. 6). Upon receiving the registration instruction, the job processing request interface RIFb registers delivery information that associates the print job identifier with the print function job processing request handler PFRHb in the job processing request handler table HTb (refer to (12) of Fig. 6).

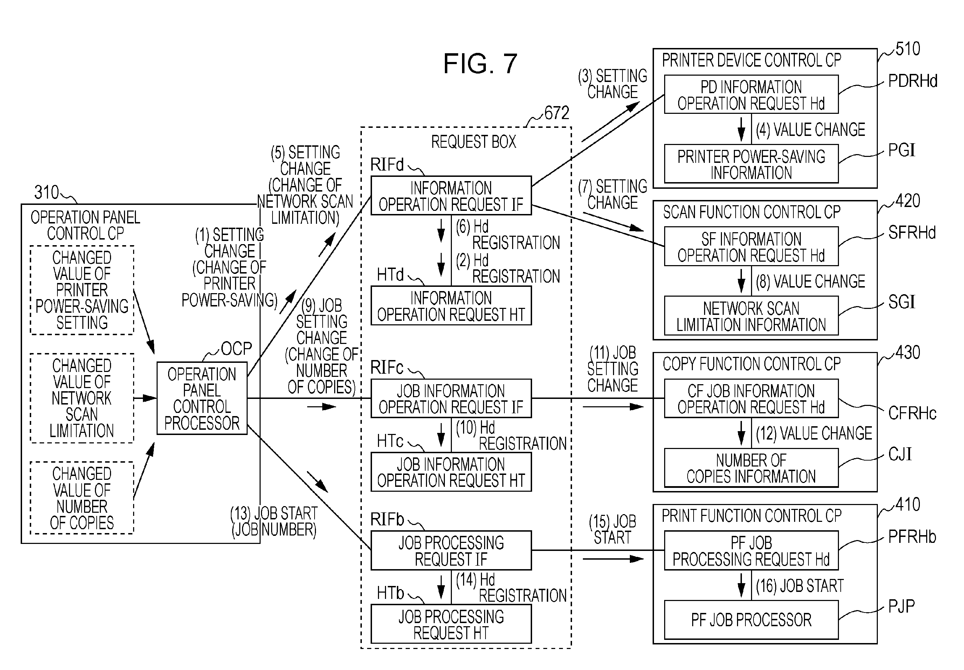

Fig. 7 is a diagram illustrating an example of the request delivery in detail. In Fig. 7, an example of delivery of a request when the registration process illustrated in Fig. 6 is executed is illustrated. In the operation panel control component 310, when an instruction to change the power-saving setting of the printer 100 is received, an operation panel control processor OCP issues a setting change request to the information operation request interface RIFd of the request box 672 using a printer device identifier and a changed value of the printer power-saving setting as arguments (refer to (1) of Fig. 7). Upon receiving the setting change request, the information operation request interface RIFd identifies (obtains) a handler associated with the printer device identifier, which is an argument of the setting change request, by referring to the information operation request handler table HTd (refer to (2) of Fig. 7), and delivers a request to the obtained handler (printer device information operation request handler PDRHd) using the changed value of the printer power-saving setting as an argument (refer to (3) of Fig. 7). Upon receiving the request, the printer device information operation request handler PDRHd changes the value of printer power-saving information PGI to the value specified by the request (refer to (4) of Fig. 7).

In a similar manner to the above, in the operation panel control component 310, when an instruction to change the network scan limitation setting is received, the operation panel control processor OCP issues a setting change request to the information operation request interface RIFd of the request box 672 using a scan function identifier and a changed value of the network scan limitation setting as arguments (refer to (5) of Fig. 7). Upon receiving the request, the information operation request interface RIFd identifies (obtains) a handler associated with the scan function identifier, which is an argument of the setting change request, by referring to the information operation request handler table HTd (refer to (6) of Fig. 7), and delivers a request to the obtained handler (scan function information operation request handler SFRHd) using the changed value of the network scan limitation setting as an argument (refer to (7) of Fig. 7). Upon receiving the request, the scan function information operation request handler SFRHd changes the value of network scan limitation information SGI to the value specified by the request (refer to (8) of Fig. 7).

In addition, in the operation panel control component 310, when an instruction to change the number of copies in a copy job is received, the operation panel control processor OCP issues a job setting change request to the job information operation request interface RIFc of the request box 672 using a copy job identifier, a changed value of the number of copies, and a job number as arguments (refer to (9) of Fig. 7). Upon receiving the job setting change request, the job information operation request interface RIFc identifies (obtains) a handler associated with the copy job identifier, which is an argument of the job setting change request, by referring to the job information operation request handler table HTc (refer to (10) of Fig. 7), and delivers a request to the obtained handler (copy function job information operation request handler CFRHc) using the changed value of the number of copies and the job number as arguments (refer to (11) of Fig. 7). Upon receiving the request, the copy function job information operation request handler CFRHc changes number of copies information CJI corresponding to the job number to the value specified by the request (refer to (12) of Fig. 7).

In addition, in the operation panel control component 310, when an instruction to start a print job is received, the operation panel control processor OCP issues a job start request to the job processing request interface RIFb of the request box 672 using a print job identifier and a job number as arguments (refer to (13) of Fig. 7). Upon receiving the job start request, the job processing request interface RIFb identifies (obtains) a handler associated with the print job identifier, which is an argument of the job start request, by referring to the job processing request handler table HTb (refer to (14) of Fig. 7), and delivers a request to the obtained handler (print function job processing request handler PFRHb) using the job number as an argument (refer to (15) of Fig. 7). Upon receiving the request, the print function job processing request handler PFRHb instructs a print function job processor PJP to start a job corresponding to the job number (refer to (16) of Fig. 7).

The delivery of a request from a component that performs the control as a client CrC to another component that performs the control as an owner CrO is realized as described above.

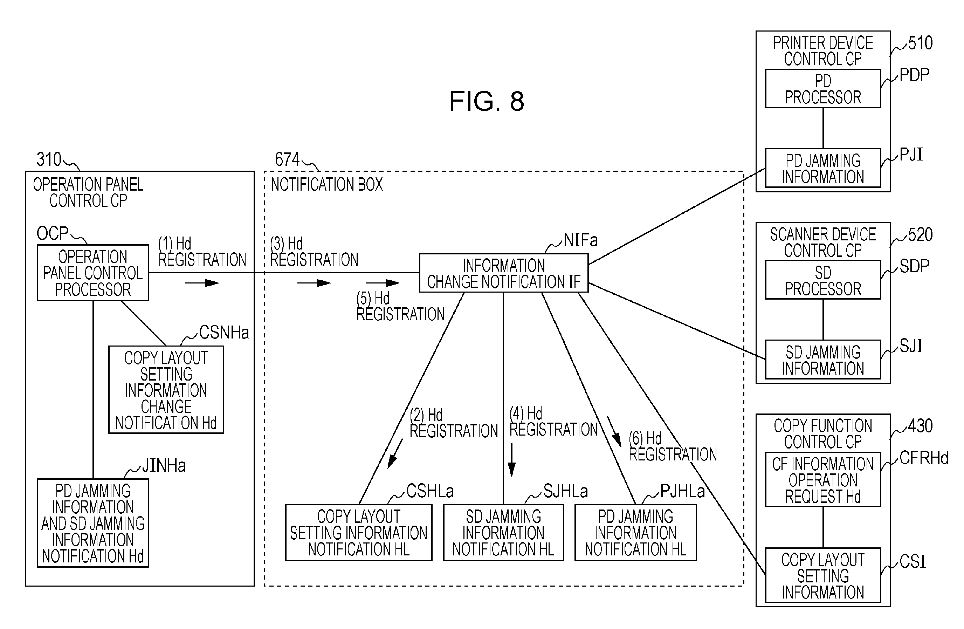

Fig. 8 is a diagram illustrating in detail the handler registration for performing the control as a client CrC. In the operation panel control component 310, the operation panel control processor OCP creates a copy layout setting information change notification handler CSNHa, and issues a handler registration instruction to the information change notification interface NIFa of the notification box 674 (refer to (1) of Fig. 8). Upon receiving the handler registration instruction, the information change notification interface NIFa registers the copy layout setting information change notification handler CSNHa in a copy layout setting information notification handler list CSHLa in the information notification handler list HLa (refer to (2) of Fig. 8).

In a similar manner to the above, in the operation panel control component 310, the operation panel control processor OCP creates printer device (PD) jamming information and scanner device (SD) jamming information notification handler JINHa, and issues a handler registration instruction to the information change notification interface NIFa of the notification box 674 (refer to (3) and (5) of Fig. 8). Upon receiving the handler registration instruction, the information change notification interface NIFa registers the printer device jamming information and scanner device jamming information notification handler JINHa in a printer device jamming information notification handler list PJHLa in the information notification handler list HLa (refer to (4) of Fig. 8) and in a scanner device jamming information notification handler list SJHLa (refer to (6) of Fig. 8).

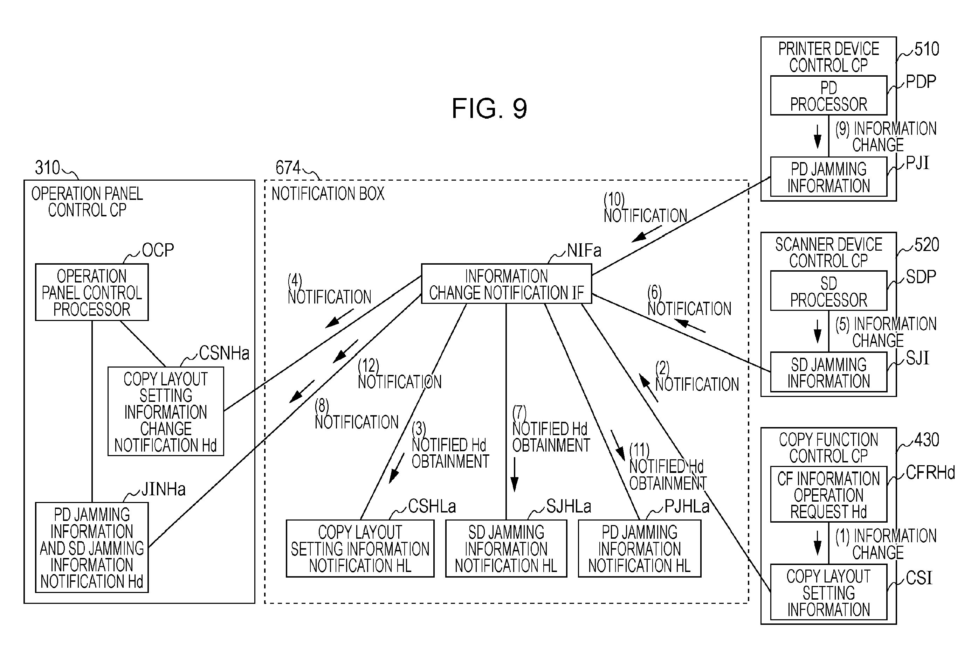

Fig. 9 is a diagram illustrating an example of the notification delivery in detail. In Fig. 9, an example of delivery of a notification when the registration process illustrated in Fig. 8 is executed is illustrated. When the setting of copy layout is changed and accordingly copy layout setting information CSI is changed by a copy function information operation request handler CFRHd (refer to (1) of Fig. 9), the copy function control component 430 issues a notification for notifying the information change notification interface NIFa of the notification box 674 of the change that has been made in the copy layout setting information CSI (refer to (2) of Fig. 9). Upon receiving the notification, the information change notification interface NIFa identifies (obtains) a handler registered as the delivery destination of the notification by referring to the copy layout setting information notification handler list CSHLa (refer to (3) of Fig. 9), and delivers a notification for notifying the obtained handler (copy layout setting information change notification handler CSNHa) of the change that has been made in the copy layout setting information CSI (refer to (4) of Fig. 7).

In a similar manner to the above, when scanner device jamming information SJI is changed by a scanner device processor SDP (refer to (5) of Fig. 9), the scanner device control component 520 issues a notification for notifying the information change notification interface NIFa of the notification box 674 of the change that has been made in the scanner device jamming information SJI (refer to (6) of Fig. 9). Upon receiving the notification, the information change notification interface NIFa identifies (obtains) a handler registered as the delivery destination of the notification by referring to the scanner device jamming information notification handler list SJHLa (refer to (7) of Fig. 9), and delivers a notification for notifying the obtained handler (printer device jamming information and scanner device jamming information notification handler JINHa) of the change that has been made in the scanner device jamming information SJI (refer to (8) of Fig. 9).

In a similar manner to the above, when printer device jamming information PJI is changed by a printer device processor PDP (refer to (9) of Fig. 9), the printer device control component 510 issues a notification for notifying the information change notification interface NIFa of the notification box 674 of the change that has been made in the printer device jamming information PJI (refer to (10) of Fig. 9). Upon receiving the notification, the information change notification interface NIFa identifies (obtains) a handler registered as the delivery destination of the notification by referring to the printer device jamming information notification handler list PJHLa (refer to (10) of Fig. 9), and delivers a notification for notifying the obtained handler (printer device jamming information and scanner device jamming information notification handler JINHa) of the change that has been made in the printer device jamming information PJI (refer to (12) of Fig. 9).

The delivery of a notification from a component that performs the control as an owner CrO to another component that performs the control as a client CrC is realized as described above.

As described above, in the printer 100 according to this embodiment, information for identifying a request that a component wishes to receive (information identification information) is registered in a handler table HT in advance, and when a request from a component that performs the control as a client CrC is received by the request box 672 in the delivery box 670, a component to which the received request is to be delivered is identified on the basis of the handler table HT and then the request is delivered to the identified component. In a similar manner to the above, in the printer 100 according to this embodiment, information for identifying a notification that a component wishes to receive (information identification information) is registered in a handler list HL in advance. When a notification from a component that performs the control as an owner CrO is received by the notification box 674 in the delivery box 670, a component to which the received notification is to be delivered is identified on the basis of the handler list HL and then the notification is delivered to the identified component. That is, in the case of the printer 100 according to this embodiment, a component that transmits information (a request or a notification) does not need to designate a component to receive the information when the information is transmitted and received between the components. For this reason, even after the hardware configuration or the functional configuration of the printer 100 is changed and accordingly the components included in the control program 124 are changed, a portion of each component relating to transmission and reception of information does not need to be changed, which makes it possible to design the components without taking account of which component each component is to communicate with. Therefore, with the printer 100 according to this embodiment, the burden of designing the control program 124 for controlling the printer 100, which is an apparatus incorporating the computer 110, can be reduced.

### B. Modification

It is to be understood that the invention is not limited to the above embodiment and may be implemented in the form of various aspects thereof so long as the scope thereof is not deviated from. For example, the following modification is possible.

### B1. Modification 1

It is to be understood that the hardware configuration of the printer 100 and the functions provided by the printer 100 described in the above embodiment are merely examples and may be modified in various ways. The components (illustrated in Fig. 2) forming the control program 124 may also be modified in various ways in accordance with the hardware configuration of the printer 100 and the functions to be provided by the printer 100. For example, the printer 100 may not have the scanner engine 160 and the fax engine 170 and therefore may be used as a single function printer that provides only the print function. In addition, it is to be understood that the configuration and content of the handler tables HTs and the handler lists HLs and the types and content of a request and a notification are merely examples and may be modified in various ways.

In addition, part of the configuration realized by hardware in the above embodiment may be realized by software instead, and, conversely, part of the configuration realized by software in the above embodiment may be realized by hardware. Furthermore, the invention may be applied not only to a printer but also to a case in which an apparatus incorporating a computer is controlled by the computer.

In addition, when some or all of the functions according to an embodiment of the invention are realized by software, the functions may be provided by being stored on a recording medium that can be read by a computer. In an embodiment of the invention, "a recording medium that can be read by a computer" refers not only to a portable recording medium such as a flexible disk or a compact disc read-only memory (CD-ROM), but also to a storage device inside a computer such as any type of random-access memory (RAM) or read-only memory (ROM) and an external storage device fixed to a computer such as a hard disk.

## Claims

1. An apparatus (100) that incorporates a computer (110) having software, the software including a plurality of components, and that is controlled by the computer, the apparatus comprising:
an obtainment unit arranged to obtain information to be delivered from a component to another component;
a registration unit arranged to register information identification information for identifying information that each component wishes to receive in a delivery table in advance; and
a delivery unit arranged to identify a component to which the information obtained by the obtainment unit is to be delivered on the basis of the delivery table and to deliver the information to the identified component.

2. The apparatus according to Claim 1, wherein the registration unit is arranged to associate component identification information for identifying the component that wishes to receive the information with the information identification information and to register the component identification information and the information identification information in the delivery table on the basis of a request from the component.

3. The apparatus according to Claim 1, wherein the component is any of a component for controlling hardware included in the apparatus, a component for realizing a certain function using the hardware, or a component for performing control relating to operation of an operation section included in the apparatus.

4. The apparatus according to Claim 1, wherein the information to be delivered is at least either a request issued from a component to another component or a notification issued from a component to one or more other components.

5. A storage medium that stores a software program for controlling an apparatus incorporating a computer and that can be read by the computer, the software program making the computer realize:
an obtainment function for obtaining information to be delivered from a component to another component;
a registration function for registering information identification information for identifying information that each component wishes to receive in a delivery table in advance; and
a delivery function for identifying a component to which the information obtained by using the obtainment function is to be delivered on the basis of the delivery table and delivering the information to the identified component.
